# EUROPEAN PATENT SPECIFICATION

(11) **EP 3 449 121 B1**
(45) Date of publication and mention of the grant of the patent: **22.04.2020**
(21) Application number: 16736254.0
(22) Date of filing: 28.04.2016
(51) Int. Cl.: F03D 7/02, F03D 1/06

(54) **METHOD FOR FOLDING WIND BLADES AND METHOD FOR OPENING WIND BLADES FOR A WIND TURBINE HAVING FOLDABLE BLADES**
VERFAHREN ZUM FALTEN VON WINDSCHAUFELN UND VERFAHREN ZUM ÖFFNEN VON WINDSCHAUFELN FÜR EINE WINDTURBINE MIT KLAPPBAREN FLÜGELN
PROCÉDÉ POUR PLIER DES PALES ÉOLIENNES ET PROCÉDÉ POUR OUVRIR DES PALES ÉOLIENNES POUR UNE TURBINE ÉOLIENNE AYANT DES PALES PLIABLES

(43) Date of publication of application: 06.03.2019
(73) Proprietor: Omegawind S.r.l., 21015 Lonate Pozzolo, Varese (IT)
(72) Inventor: GARAVIANI, Daniele, I-21010 Ferno Varese (IT)
(74) Representative: Leihkauf, Steffen Falk
(86) International application number: PCT/IT2016/000104
(87) International publication number: WO 2017/187459

(56) References cited:
- DE-A1- 4 413 278
- US-A1- 2007 243 063
- US-A1- 2009 022 589
- US-A1- 2010 133 848

## Description

### Field of the invention

The present invention relates to the industrial field of wind turbines for generating electric energy, in particular wind turbines with folding blades for resisting strong winds. More specifically, the present invention relates to a rotor unit of such a wind turbine.

### Background art

Wind turbines are devices adapted to generate electric energy by exploiting the speed of the wind. They comprise a rotor which may rotate about a rotation axis to which rotor blades are connected by being generally arranged in a substantially radial direction with respect to the rotation axis and have a wing profile designed to bring the rotor into rotation when they are affected by the wind. An electric generator is connected to the rotor to receive a rotating motion from the rotor and to transform such a rotating motion into electric energy.

A known type of wind turbine is the one with horizontal axis, in which the rotation axis of the rotor is horizontal, or substantially horizontal.

Horizontal axis wind turbines are supported by a vertical tower adapted to carry the rotor and the electric generator.

The electric generator is generally associated with an inverter, a transformer, an electric circuitry and a control unit, in order to manage the electric energy generated and to command the turbine. These components are generally contained in a shell or nacelle, with respect to which the rotor is supported pivotally about a rotor axis.

The nacelle is generally supported in turn by the tower in a rotatable manner about a substantially vertical axis in order to direct the rotor according to the direction of the wind.

The generation of electric energy supplied by the electric generator of the wind turbine depends on the rotation speed of the rotor and on the torque applied to the rotor by the blades, therefore the tendency is to use large blades and to install wind turbines in areas which on average are windy, for example in plains or on offshore platforms in the sea or in a lake.

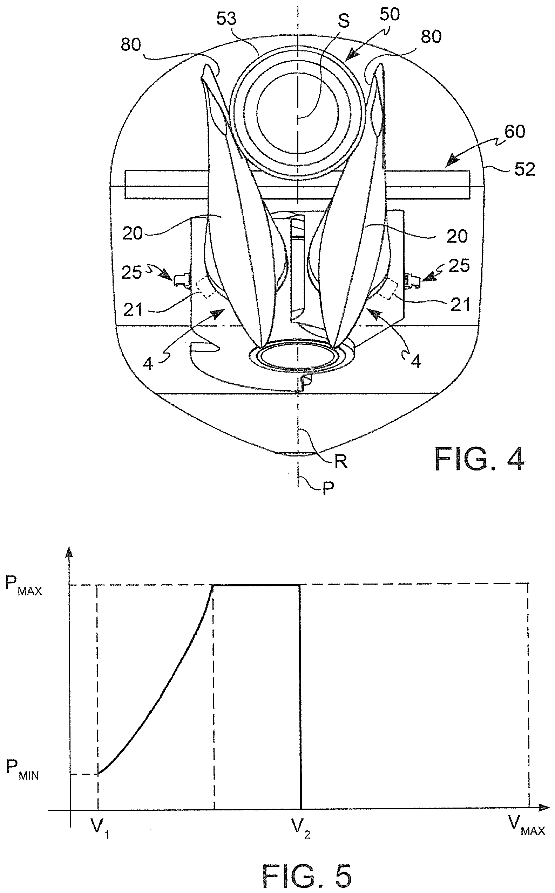

A typical trend of the power supplied by the electric generator of the wind turbine as a function of the wind speed is depicted in the graph in figure 5, in which the wind speed may be exploited in a speed range between a minimum exploitable wind speed value V1 and a maximum exploitable wind speed value V2. When wind speeds exceed V2, electric energy may not be generated due to physical and structural limitations both of the wind turbine and of the devices for generating electric energy.

With reference to the wind speed range between V1 and V2, in a first section of such a speed range of the exploitable wind, the power supplied increases with the wind speed from a minimum power value Pₘᵢₙ to a maximum power value Pₘₐₓ. In a second section of such a wind speed range, the power supplied remains constant at a value Pₘₐₓ due to physical limitations of the devices for generating electric energy and to structural limitations.

When the wind exceeds the maximum exploitable wind speed value V2, and therefore takes on a speed value ranging between V2 and a maximum wind speed value Vₘₐₓ, the rotor is substantially stopped, thus limiting the angular rotation in order to limit the aerodynamic loads exerted by the wind on the wind turbine. The wind turbine is therefore stopped between the maximum exploitable wind speed value V2 and the maximum wind speed Vₘₐₓ, in order to resist a storm and not generate electric energy. The mechanical stresses exerted by the wind on the turbine under such conditions are extremely high.

In order to resist such extreme stresses, known wind turbines intended for such a use should be designed to have a very sturdy turbine structure, which is particularly demanding in terms of design and construction and is therefore particularly expensive.

In an attempt to overcome the aforesaid problem, folding blade wind turbines have been designed in order to fold such blades in a standby mode when the wind is greater than V2.

In this regard, Patent Application US 2010/0133848 discloses a horizontal axis wind turbine comprising a beam hub and two blades hinged to the two opposite ends of the beam hub at hinge points spaced apart from each other in order to fold such blades towards the tower.

The two blades are therefore restrained to be folded about two distinct and separate folding axes.

This solution results in the disadvantage that the presence of the beam hub prevents reducing the wind turbine surface resistant to the action of the wind, in addition to the limitation given by the length of the beam hub between the two hinge points, also when the blades are folded. Indeed, the beam hub continues to oppose significant aerodynamic resistance since it protrudes laterally by a considerable length with respect to the tower, also when the blades are closed. Moreover, the folded portions of the blades are hinged at points which are far from the rotor and, therefore, they also oppose high resistance to the wind.

Such a wind turbine is not capable of resisting high wind speed values; or, in order to resist, it should comprise an extremely rigid and resistant, and accordingly expensive, structure.

Patent Application US 2007/0243063 discloses a folding blade wind turbine which proposes to minimize damage during storms or other events with strong winds and to facilitate maintenance.

This wind turbine comprises three blades, two of which foldable about separate hinge points arranged at the free ends of respective blade bases fastened radially to the rotor.

For the same reasons noted above, this wind turbine also hinders the encumbrance, or the resistant surface, from being reduced when the blades are closed, to such a degree as to resist high values or peaks in wind speed, because such blades remain spaced apart from the tower at least at the hinge points of the blade bases.

Therefore, even this solution does not satisfy the needs to provide a wind turbine capable of resisting high values or peaks in the wind speed, thus avoiding to make an extremely sturdy and expensive structure.

Therefore, the need is felt to close the blades of the wind turbine when the maximum exploitable wind speed V2 is reached in order to avoid damaging any components of the wind turbine during this closing step, which is highly critical in terms of environmental mechanical stresses. Such an operation of closing the blades should be done quickly by means of a sequence of steps.

For wind speed values ranging between the maximum exploitable wind speed value V2 and the maximum wind speed value Vₘₐₓ, the wind turbine should also ensure correct and safe maintenance of the blades in the folded position, while opposing the minimum aerodynamic resistance also in such a folded position.

In particular, none of the known solutions allows the blades to be closed in such a way as to substantially reduce the aerodynamic resistance during such a closing step, in a quick and accurate manner.

Moreover, none of the known solutions allows the blades to be positioned in a folded position capable of ensuring the minimum aerodynamic resistance in the folded position and the correct maintenance of such a position despite the criticality of the environmental conditions.

### Summary of the invention

It is an object of the present invention to devise and provide a method for folding the blades of a folding blade wind turbine which allows the aforesaid needs to be met while at least partly obviating the drawbacks indicated above with reference to the known art.

It is a further object of the present invention to provide a method for folding blades of a wind turbine which is capable of allowing blades to be closed from the open position to the folded position and which can be performed quickly.

It is a further object of the present invention to provide a method for folding blades of a wind turbine capable of ensuring reduced aerodynamic resistance when the blades are in the folded position.

It is another object of the present invention to provide a blade folding method capable of providing an intrinsically safe solution and of requiring a minimum energy source to complete the folding procedure and consequent implementation of safety measures of the blades.

It is another object of the present invention to reduce by about 60% the resulting bending moment at the base of the tower due to the aerodynamic action of the winds acting on the blades, the tower and the nacelle with respect to known wind turbines.

It is another object of the present invention to provide a wind turbine which has the aforesaid advantages.

These and further objects and advantages are achieved by means of a method for folding wind blades in accordance with the appended independent claim 1 and a method for unfolding wind blades in accordance with the appended independent claim 11.

Further objects, solutions and advantages are found in the embodiments of the method hereinafter described and claimed in the dependent claims.

### Brief description of the drawings

The invention will be disclosed below with the description of certain embodiments thereof, made by way of a non-limiting example, with reference to the accompanying drawings in which:

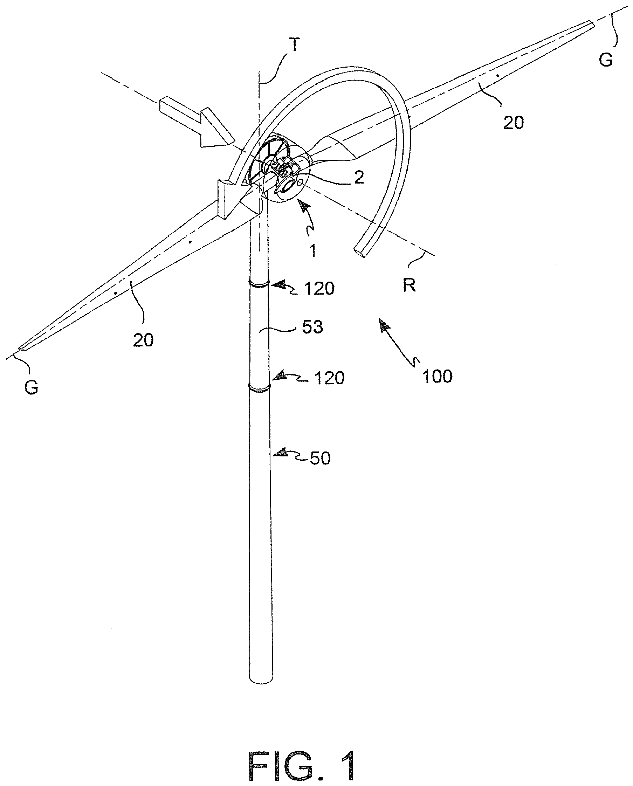

figure 1 shows a perspective view of a blade wind turbine in the unfolded, or operating, position during the normal operation thereof, in which the wind actuates the blades in rotation to drive the rotor body into rotation and generate electric energy, and in which the nacelle is depicted transparent to facilitate the description;

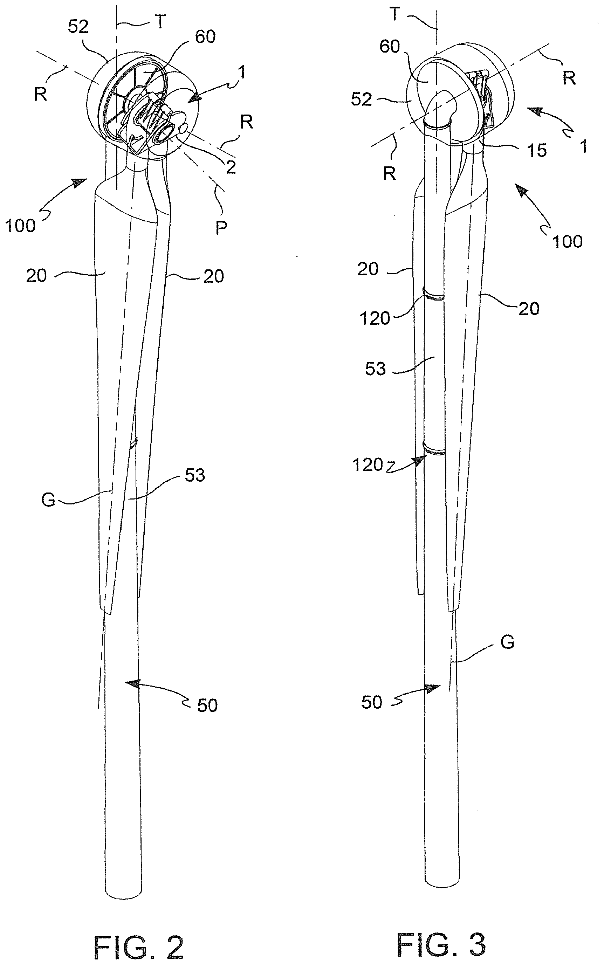

- figure 2 shows a rear perspective view of the rotor unit in figure 1, in which the blades are in a folded position;

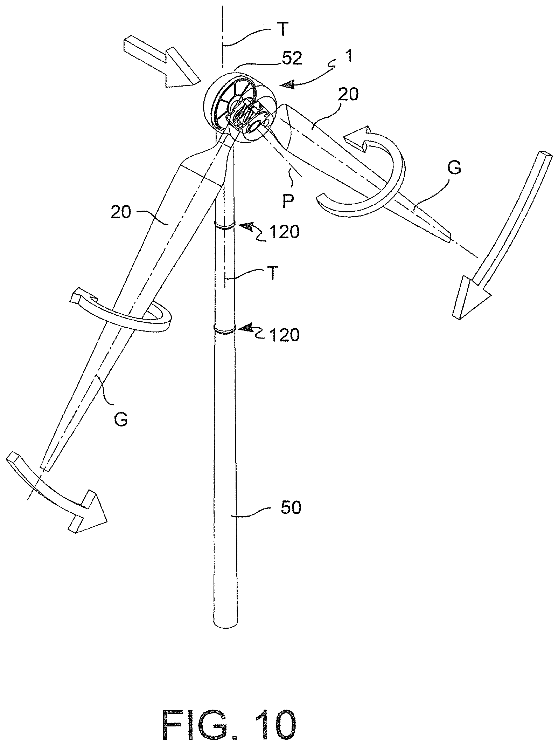

- figure 3 shows a front perspective view of the rotor unit in figure 10, in which the blades are in a folded position;
- figure 4 shows a bottom view of the wind turbine in figure 2, in the folded position;
- figure 5 shows a graph of the trend of the power supplied by the wind turbine as a function of the wind speed;

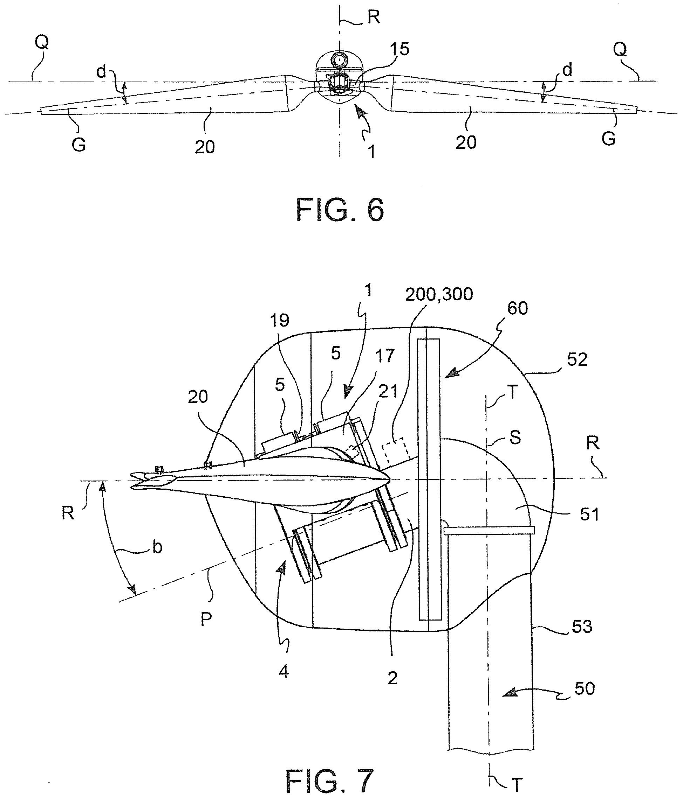

- figure 6 shows a top view of the wind turbine in figure 1, in which the blades are in the stopped position along a horizontal plane;
- figure 7 shows a partial side view of the wind turbine in figure 6, in the stopped position;

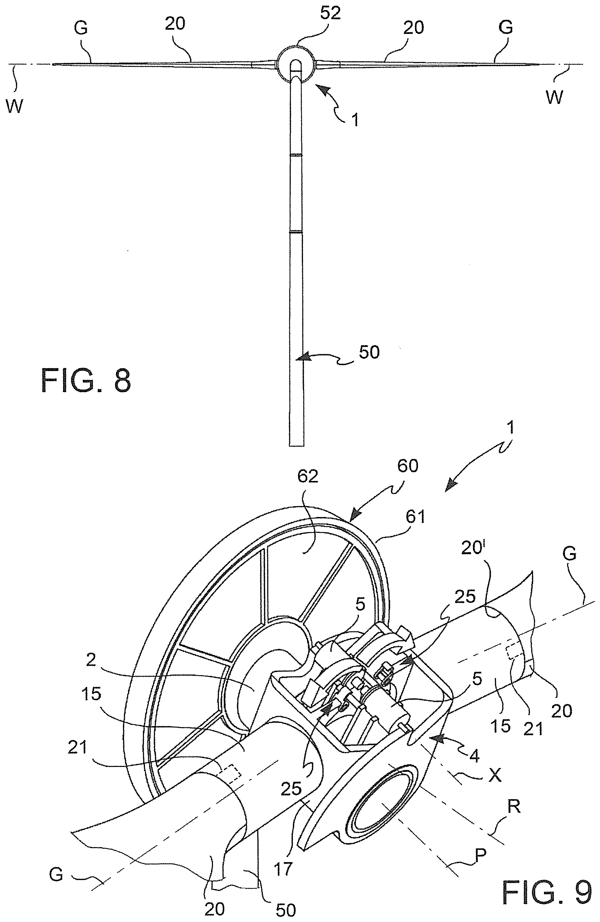

- figure 8 shows a front view of the wind turbine in figure 6, in the stopped position and during a step of stopping of the method according to the invention;
- figure 9 shows a partial rear perspective view of the rotor unit during a blade release step according to the method of the invention, preceding the blade folding from the unfolded position to the folded position;
- figure 10 shows a rear position, intermediate between the unfolded position and the folded position during a step of rotating the blades and of orientating the two blades in accordance with the folding method of the invention;

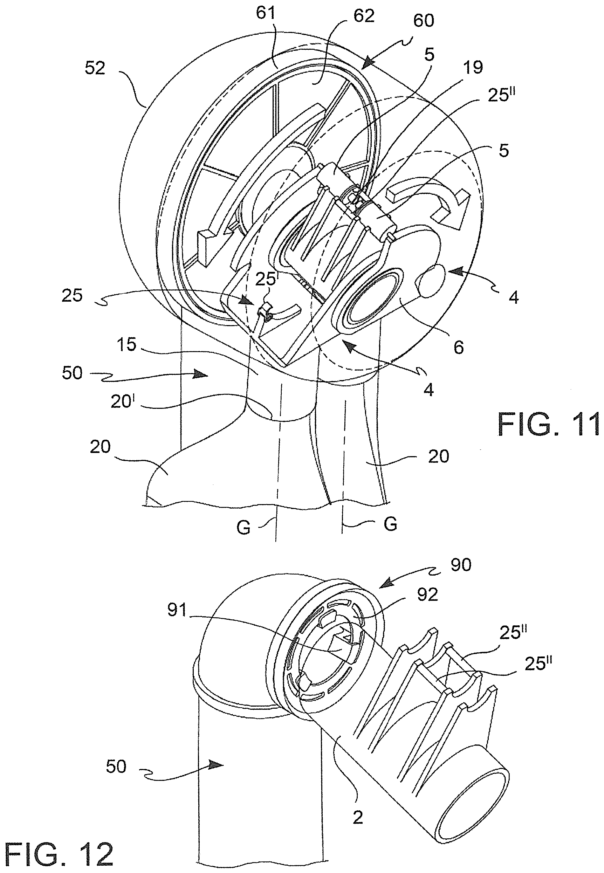

- figure 11 shows a partial rear perspective view of the rotor unit of the turbine in figure 2, during a further step of rotating the blades to perform an accurate approach to the tower;
- figure 12 shows a rear view of the rotor brake of the wind turbine;

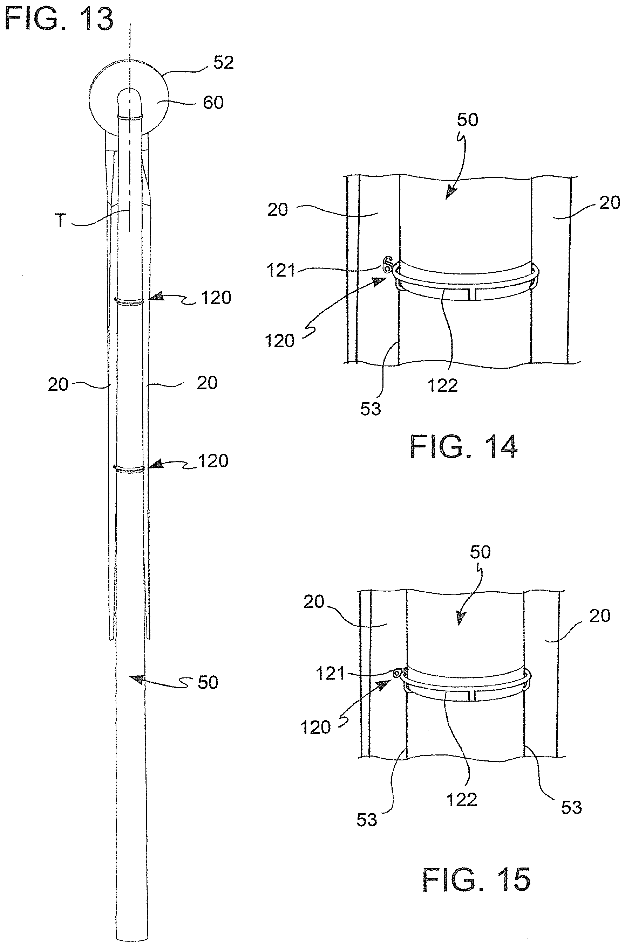

- figure 13 shows a step of securing the blades to the tower when they are in the folded position;
- figures 14 and 15 show a step of securing the blades to the tower in accordance with the invention, in which blade fastening devices are depicted in a disengaged position and in an engaged position, respectively;
- figure 16 shows a block diagram which describes the blade folding method according to the invention;

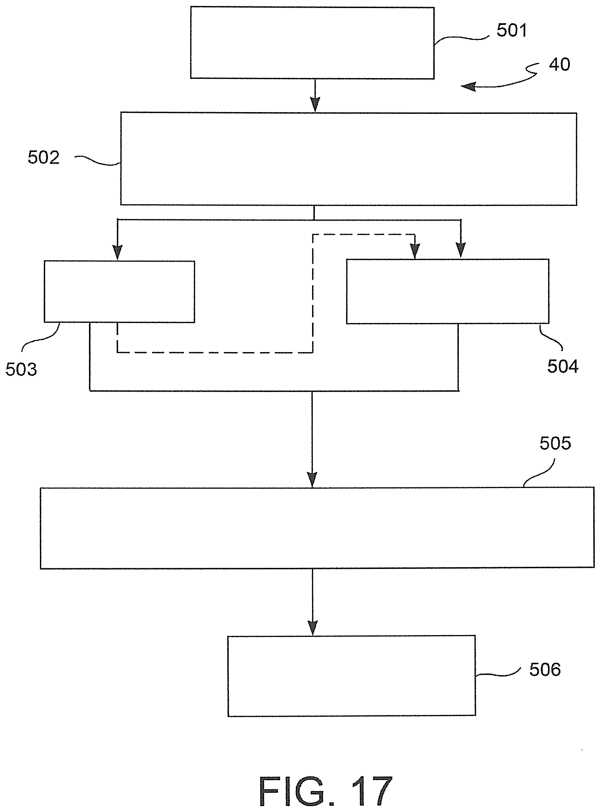

- figure 17 shows a block diagram which describes a blade unfolding method according to the invention;

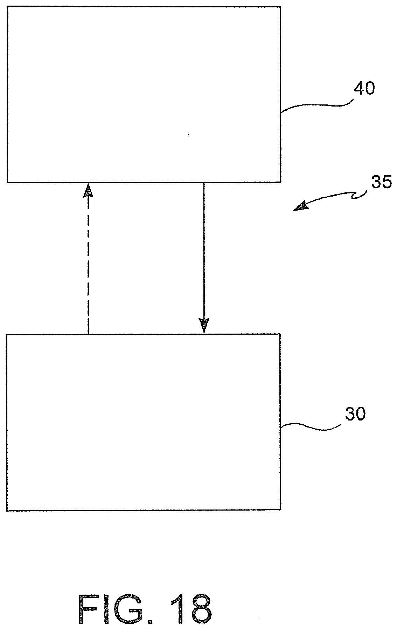

- figure 18 shows a block diagram of a blade actuation method comprising the blade folding method in figure 16 and the blade unfolding method in figure 17.

### Description of preferred embodiments

With reference to the figures, a folding blade wind turbine is generally indicated with numeral 100.

Moreover, with reference to the drawings, a method folding wind blades according to the invention is generally indicated with numeral 30, and a method for unfolding wind blades according to the invention is generally indicated with numeral 40.

Finally, again with reference to the drawings, a method for actuating wind blades according to the invention is generally indicated with numeral 35.

The wind turbine 100 comprises a rotor unit 1 comprising a rotor body 2 arranged to rotate about a rotor axis R and a tower 50 adapted to support said rotor unit of wind turbine 1.

Tower 50 defines a tower axis T arranged along a main direction of extension of tower 50.

The tower defines an outer lateral surface 53 of tower of wind turbine.

The wind turbine 100 comprises two blades 20, each defining a respective blade longitudinal axis G arranged along a main direction of blade extension, and an outer surface 80 of blade, which externally delimits said blade 20.

The blades 20 are connected to the rotor unit 1 to rotate with respect to each other between an unfolded position and a folded position and vice versa.

In the unfolded position, both blades 20 are arranged with the respective blade longitudinal axis G along a same unfolded blade axial plane W-W comprising the rotor axis R, on opposite sides with respect to the rotor axis (R).

In accordance with an embodiment, tower 50 defines a tower axis T along a main direction of extension of tower 50, in which, in said stopped angular position, the two blades 20 are arranged so that the unfolded blade axial plane W-W is substantially orthogonal to the tower axis T.

In the unfolded position, the blades 20 are arranged, or orientated, to be able to be affected by the wind to bring said rotor body 2 into rotation about said rotor axis R, while, in the folded position, the two blades 20 are angularly close to each other and placed side-by-side with the tower 50.

Blade longitudinal axis G means an axis along which the larger dimension of blade 20 itself is arranged. In other words, the blade longitudinal axis G is a main axis of extension of blade 20.

In accordance with an embodiment, the blade longitudinal axis G is, for example, a substantially rectilinear axis.

In accordance with an embodiment, when the blades are in the unfolded position, the blade longitudinal axis G is tilted with respect to a radial plane Q which is orthogonal to the rotor axis R, according to a preset angle d.

The wind turbine comprises at least one actuator 5 arranged to rotate the two blades 20 with each other between the unfolded position and the folded position and vice versa.

The rotor unit 1 further comprises at least one actuator 5 as described above, which is arranged to move the two blade folding structures 4 with respect to each other.

In accordance with an embodiment, said at least one actuator 5 comprises at least one linear actuator, for example at least one hydraulic cylinder, or at least one pneumatic cylinder, or at least one actuator with a screw-nut system, for example at least one screw system with recirculating balls.

In accordance with an embodiment, said at least one actuator 5 comprises at least one rotating actuator, for example at least one gear-motor, comprising a rotary motor and a reduction gear.

In accordance with an embodiment, the rotary motor is an electric motor or a hydraulic motor.

Moreover, in accordance with this embodiment, the wind turbine may comprise a folding brake 19 separated by the at least one actuator 5.

In such a case, the rotor unit 1 comprises a folding brake 19, for example associated with actuator 5, the folding brake 19 being adapted to oppose the movement of the blades 20 between the unfolded position and the folded position.

For example, the folding brake 19 is a mechanical brake, for example a disc brake or a drum brake. Alternatively, the folding brake 19 is integrated together with actuator 5.

In accordance with an embodiment, the two blade folding structures 4 are pivotally restrained to each other about a same hinge axis P. Thereby, the folding structures 4 are adapted to rotate the at least two blades 20 about the hinge axis P between the unfolded position and the folded position and vice versa.

In accordance with an embodiment, the two blade folding structures 4 are pivotally engaged with the rotor body 2 about a hinge axis P.

In accordance with a further embodiment, the blade folding structures 4 are pivotally engaged about different hinge axes P.

Each of said two blade folding structures 4 supports only one blade 20.

Advantageously, due to the fact that the two blade folding structures 4 are pivotally engaged to each other about a same hinge axis P, the wind turbine occupies an extremely reduced volume in all directions of the wind when the blades 20 are in the folded position. Due to the presence of only one hinge axis P, the blades 20 in the folded position are very close to each other and they may embrace tower 50 laterally.

Under these conditions, since such a wind turbine has a very small encumbrance in the direction transverse to the wind when the blades 20 are in the folded position, such a wind turbine opposes a reduced aerodynamic resistance, i.e. the resultant of the forces applied by the wind to the structure of the wind turbine, according to the present invention, is less than the one applied to known wind turbines, a less sturdy structure with respect to known turbines is required, the wind speed being equal.

In accordance with an embodiment, the hinge axis P is tilted with respect to the rotor axis R according to a preset tilt angle b.

For example, the tilt angle b ranges between 1° and 40°, preferably ranges between 5° and 20°, and still more preferably between 8° and 12°.

For example, the tilt angle b is selected so that, when the blade folding structures 4, or the blades 20, are in the folded position, the blades 20 are placed side-by-side with the tower 50 in a tilted manner with respect to the tower axis T, according to a preset closure angle with respect to the rotor axis R.

In accordance with an embodiment, the rotor unit 1 comprises two blade folding structures 4 connected to the rotor body 2 and each comprising a blade fastening portion 17 for fastening an end portion of a respective blade 20 of each of said two blade folding structures 4.

In accordance with an embodiment, for each blade folding structure 4, the rotor unit 1 comprises a blade joint 15 adapted to fasten a blade fastening end 20' to a respective one of said at least two blade folding structures 4, so as to allow the only rotation of blade 20 about the blade longitudinal axis G with respect to the blade folding structure 4. In other words, the blade joint 15 is adapted to carry a respective blade 20, thus preventing any movement of blade 20 with respect to the folding structure 4, other than the rotation of blade 20 about its own blade longitudinal axis G with respect to the blade folding structure 4.

The blade joint 15 comprises a blade orientation actuator 21 for actuating the rotation of blade 20 about the blade longitudinal axis G. The rotation of blade 20 about its own blade longitudinal axis G allows the helix pitch of the wind turbine to be varied.

In accordance with an embodiment, the blocking/unblocking devices 25 comprise a rotatable hook element 25' mounted on one of the blade folding structure 4 and the rotor body 2, and a coupling element 25" which is integral with the other of the blade folding structure 4 and the rotor body 2, the hook element 25' being adapted to be removably engaged with the coupling element 25".

In accordance with an embodiment, the blocking/unblocking devices 25 comprise an actuator adapted to actuate said blocking/unblocking devices, for example a motorized actuator, for example an automatic motorized actuator.

In accordance with an embodiment, the electric generator 60 is of the "direct drive" type. In other words, it comprises an outer annular stator 61 and an inner disc rotor 62, which is adapted to rotate coaxially and internally to the outer annular stator 61.

The inner disc rotor 62 is, for example, spliced onto the rotor body 2 so as to allow the rotation of the rotor body 2 about the rotor axis R.

This type of electric generator 60 allows the encumbrance of the generator itself 60 to be reduced in the direction which extends along the rotor axis R, or along an axial direction of electric generator 60. This allows the distance of the center of gravity of the rotor unit 1 to be reduced with respect to the turbine orientation axis S, and therefore the overhang of the rotor unit 1 to be reduced with respect to tower 50. This aspect is particularly significant in order to give the wind turbine high structural strength, considering the great size and weight of the rotor unit 2. This aspect is highly advantageous also because it allows the overall size, and therefore the aerodynamic resistance of the rotor body 2, to be reduced.

For example, the outer annular stator 61 is fastened to a supporting portion 51, which is connected to the upper end of tower 50 in a rotatable manner about the turbine orientation axis S.

In accordance with an embodiment, the wind turbine 100 comprises a rotor brake 90 adapted to oppose the rotation of the rotor unit 1 about the rotor axis R.

Such a rotor brake 90 is adapted to oppose the rotation of the rotor body 2 about the rotor axis R.

In accordance with an embodiment, the rotor brake 90 is a mechanical brake or an electromagnetic brake.

For example, the rotor brake 90 has a first portion which is integral with the rotor body 2, and a second portion which is stationary with respect to the rotor body 2, for example the second portion is integral with the outer annular stator 61 of the electric generator 60.

For example, such a brake is a disc brake, in which for example, the disc brake has a brake disc 92 keyed onto the rotor body 2 and pincer bodies 91 mounted on the outer annular stator 61 of the electric generator 60, which are adapted to force pads against the brake disc 92 to brake the rotation of the rotor body 2.

The rotor unit 1, blades 20, electric generator 60 assembly is contained inside a containment shell 52, or nacelle. The shape of the containment shell 52 is designed so as to further reduce the aerodynamic resistance against the action of the wind.

In accordance with an embodiment, the wind turbine 100 comprises blade fastening devices 120 which can be actuated between a fastened position, in which the blades 20 are restrained to tower 50 in the folded position, and an unfastened position, in which the blades 20 are free to move away from tower 50.

In accordance with an embodiment, the blade fastening devices 120 comprise a hook element 121 associated with one of blade 20 and tower 50, and a coupling seat 122 associated with the other of blade 20 and tower 50, said hook element 121 being operable between an engaged position with the coupling seat 122 and a disengaged position from the coupling seat 122.

In accordance with an embodiment, the hook elements 121 comprise actuators for the actuation between the engaged position and the disengaged position.

In accordance with an embodiment, the wind turbine further comprises a supply unit 300, which in the absence of an external power supply to the wind turbine supplied by the electric network, serves to allow the blades 20 to be folded and the safety measures thereof to be implemented.

Preferably, the supply unit 300 is adapted to supply at least one of the following devices or a combination thereof:
- the actuation of the pincer bodies 91,
- the blade orientation actuator 21,
- the actuation of actuator 5,
- the actuation of the folding brake 19,
- the actuation of the blade blocking/unblocking devices 25,
- the actuation of the tower blade fastening devices 120,
- the control unit 200.

The wind turbine according to the invention further comprises a blade unfolding/folding control unit 200 having an input for receiving an unfold/fold command signal, and is operatively connected with at least one of the following devices, or a combination thereof:
- the at least one actuator 5,
- at least one folding brake 19,
- at least one blade orientation actuator 21,
- at least one blocking/unblocking device 25,
- at least one pincer body 91,
- at least one blade fastening device 120,
- at least one supply unit 300.

The blade unfolding/folding control unit 200 is programmed to execute the method for folding wind blades 30 and the method for unfolding wind blades 40 described below.

In accordance with an embodiment, the blade unfolding/folding control unit 200 is operatively connected with actuator 5 to allow an accurate approach of the blade 20 to tower 50 when the blades 20 are in the folded position and to actuate the blades 20 from the folded position to the unfolded position.

In accordance with an embodiment, the blade unfolding/folding control unit 200 is operatively connected with said folding brake 19 to control the rotation speed of the blade folding structures 4 between the unfolded position and the folded position and vice versa.

In accordance with an embodiment, the blade unfolding/folding control unit 200 is operatively connected to at least one blade orientation actuator 21 to command the blade pitch.

In accordance with an embodiment, the blade unfolding/folding control unit 200 is operatively connected to said blocking/unblocking devices 25 to command the blocking of the blade folding structures 4 when they are in the unfolded position and to release the blade folding structures 4 to allow the rotation thereof from the unfolded position to the folded position.

In accordance with an embodiment, the blade unfolding/folding control unit 200 is operatively connected to at least one pincer body 91 to oppose the rotation of the rotor body 2 about the rotor axis R.

In accordance with an embodiment, the blade unfolding/folding control unit 200 is operatively connected to the blade fastening devices 120 to block the blades 20 in the position close to tower 50 when they are in the folded position.

In accordance with an embodiment, the blade unfolding/folding control unit 200 is operatively connected to a supply unit 300 for ordering the supply of the devices adapted to allow the folding to be executed in the absence of supply from the electric network.

In accordance with an embodiment, the blade unfolding/folding control unit 200 comprises a central processing unit (CPU) and a memory, for example a programmable memory, for executing a preset sequence of steps for actuating the wind turbine 100 to rotate the blades 20 between the unfolded position and the folded position and vice versa.

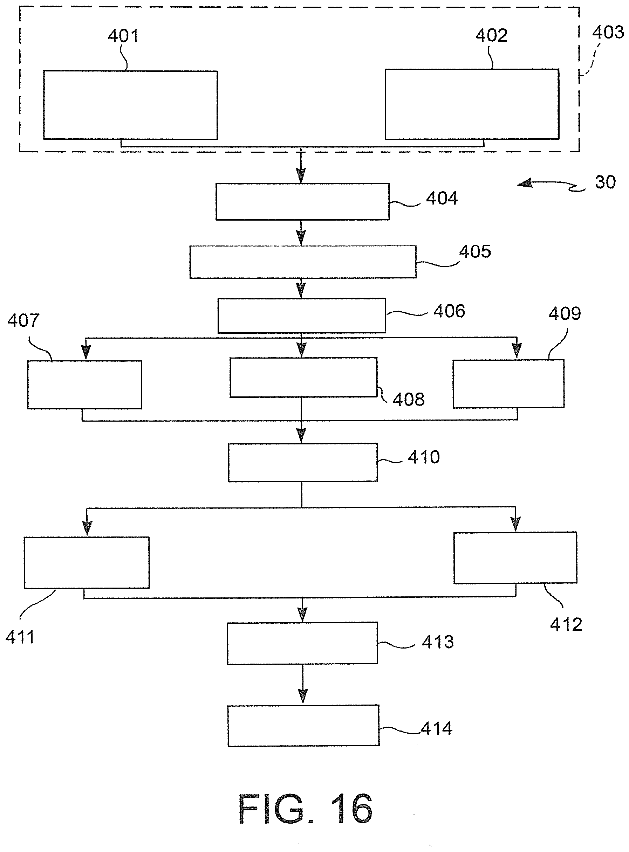

According to one aspect of the invention, the aforesaid objects and advantages are obtained by means of the method for folding 30 wind blades, an example of which is shown in figure 16.

Such a method comprises a step of stopping 404 the rotation of the rotor body 2 in a preset stopped angular position, in which said blades 20 are arranged in the unfolded position.

According to one embodiment, the stopped angular position has the blades 20 substantially horizontal and therefore orthogonal to tower 50.

Such a stopping step 404 serves to stop the rotor body 2 so as to allow the blades 20 to be folded from such a position.

In accordance with an embodiment, the step of stopping 404 the rotation of the rotor body 2 in a preset stopped angular position is preceded by a step of reducing 403 the rotation speed of the rotor unit 1 up to zeroing the speed at the preset stopped angular position.

In accordance with an embodiment, the step of reducing 403 the rotation speed of the rotor unit 1 comprises a commanded braking step 401, which is preferably controlled, of the rotation of the rotor body 2.

Preferably, such a commanded braking step 401 may be executed by means of the aforesaid rotor brake 90 by actuating the pincer bodies 91. Thereby, a mechanical braking of the rotor body 2 is obtained.

In accordance with an embodiment, the step of reducing 403 the rotation speed of the rotor unit 1 is executed by actuating each blade orientation actuator 21 so as to orientate the blades 20 about the respective blade longitudinal axis G according to an angle of incidence such to cause a highly aerodynamic resistance on the blades 20 during the rotation thereof about the rotor axis R.

Thereby, the interaction between the wing surface of the blades 20 and the surrounding air acts as a brake against the rotation of the rotor unit 1, thus slowing down the rotation. Thereby, an aerodynamic braking 402 is obtained.

In accordance with an embodiment, the step of reducing 403 the rotation speed of the rotor unit 1 is executed by means of a simultaneous action of mechanical braking and aerodynamic braking.

In accordance with an embodiment, the folding method comprises a step of maintaining 405 the preset stopped angular position, for example said maintenance step occurs by means of the constant actuation of the pincer bodies 91.

In accordance with an embodiment, the folding method 30 comprises a step of unblocking 406 the blade folding structures 4 by the actuation of the blocking/unblocking devices 25.

The folding method 30 further comprises a first step 407 of rotating the blades 20 from the stopped angular position to the folded position, about the rotation axis P in which the two blades 20 are arranged substantially along said tower 50.

The folding method 30 further comprises a step of braking 408 the blades 20 in opposition to the rotation of the blades from the stopped angular position to the folded position. Thereby, the descent speed of the blades may be adjusted.

For example, the braking step 408 is executed by actuating said at least one actuator 5 as a brake.

In other words, the at least one actuator 5 is used in opposition to the action of the force of gravity of the blades 20, in order to slow down the downward travel thereof, or the travel thereof towards tower 50.

In accordance with an embodiment, the rotor unit 1 comprises a folding brake 19 adapted to oppose the movement of the blades 20 between the unfolded position and the folded position, wherein the step of rotating the blades 20 from the stopped angular position to the folded position is executed in cooperation with a step of actuating said folding brake 19.

Thereby, the braking step 408 is executed by actuating a folding brake 19.

The folding method 30 further comprises a step of first orientation 409 of the blades 20 about the blade longitudinal axis G so that the outer surface 80 of blade is arranged at least partly tangent to said outer lateral surface 53 of tower. Such a step of first orientation 409 occurs by actuating the blade orientation actuator 21 of each blade joint 15.

In accordance with an embodiment, the step of first rotation 407 of the blades 20 from the stopped angular position to the folded position is executed in cooperation with a braking step 408 in opposition to the rotation of the blades 20 and in cooperation with the first orientation step of the blades 20.

Thereby, the braking 408 of the blades and the orientation 409 of the blades 20 about the longitudinal axis G thereof occurs in the shadow of the falling movement of the blades 20, or of first rotation 407 of the blades 20 up to the folded position, thus reducing the overall time required to fold and position the blades 20. This reduction of time is very important for the purposes of the mechanical resistance of the structure under the adverse environmental conditions in which it should occur.

In accordance with an embodiment, the step of first rotation 407 of the blades 20 from the stopped angular position to the folded position occurs due to the effect of the applied force of gravity of the blades 20. In other words, the force of gravity of the blades 20 is exploited to facilitate the downward rotation thereof, that is towards tower 50, which is generally substantially vertical.

The method for folding 30 further comprises a step of releasing 410 the folding brake 19 to allow successive steps of accurate actuation of the orientation and rotation of the blades 20.

In accordance with an embodiment, the folding method 30 comprises a second step of orientating 411 the blades 20 about the blade longitudinal axis G thereof in order to accurately adjust the position of the blades 20 when the blades 20 are in the folded position, said second orientation step 411 being executed by actuating said blade orientation actuator 21 of each blade 20.

This second orientation rotation 411 allows the blades 20 to close about tower 50 by embracing it and exploiting the curvature of the outer surfaces 80 of blade to reduce the space interposed between the outer surfaces 80 of blade and the outer lateral surface 53 of tower.

In accordance with an embodiment, the blade folding method 30 comprises a step of further moving the blades 20 close to tower 50 by means of a second step of rotating the blade folding structures 4.

In other words, at the end of the folding movement of the blades 20, the step of further moving the blades 20 closer may be executed by actuating the actuators 5 to carry out an accurate approach to tower 50.

In accordance with an embodiment, the step of second rotation 412 of the blades 20 is executed in cooperation with a second orientation 411. Thereby, the second orientation 411 of the blades 20 occurs in the shadow of the second rotation movement, thus reducing the overall time required to fold and position the blades 20.

In accordance with an embodiment, the step of further moving closer is maintained up to securing the blades 20 to tower 50.

In accordance with an embodiment, when the blades 20 are in the folded position, they form, together with tower 50, a profile with reduced aerodynamic resistance.

The step of mechanical braking 401 and aerodynamic braking 402 of the blades 20, the step of stopping 404 the rotation of the rotor body 2, the step of maintaining the stopped angular position 405, the step of unblocking 406 the blade folding structure 4, the step of first rotation 407 of the blades 20, the braking step 408, the step of first orientation 409 of the two blades 20, the step of releasing 410 the folding brake, the step of second orientation 411 of the blades 20 and the step of second orientation 412 of the blades 20 are controlled by means of the blade unfolding/folding control unit 200. In other words, the control unit carries out such steps by actuating the rotor brake 90 through the pincer bodies 91, the blade orientation actuators 21, the blocking/unblocking devices 25, the at least one actuator 5, the at least one folding brake 19, in a synchronized manner. If an electric network supply is not present, the supply of said devices occurs by means of a power supply unit 300.

In accordance with an embodiment, the blade folding method 30 comprises a step of fastening 413 the blades 20 to tower 50 when said blades 20 are in the folded position by actuating said blade fastening devices 120.

In accordance with an embodiment, the blade folding method 30 comprises a step of interrupting 414 the actuation of the at least one actuator 5, after the step of fastening 413 the blades 20 to tower 50.

Thereby, the blades 20 are left free in the relative deformation between blades 20 and tower 50 due to strong winds, thus avoiding excessive and irregular structural loads.

The step of fastening 413 the blades 20 to tower 50 and the step of interrupting 414 the actuation of actuator 5 may be controlled by means of the blade unfolding/folding control unit 200. In other words, the control unit 200 carries out such steps by actuating the blade fastening device 120 and interrupting the actuation of actuator 5. If the electric network supply is not present, the supply of said devices occurs by means of a supply unit 300.

A blade folding command 30 may be provided to the wind turbine automatically, or manually, when the speed of the wind which hits the wind turbine reaches the maximum exploitable wind speed value V2, or following a weather forecast, or following the need for maintenance or inspection.

Advantageously, the aforesaid blade folding method 30 allows to avoid damages to the wind turbine, the wind turbine comprising blades 20 having large size and large surfaces resisting to the wind and to high weights.

According to another aspect of the invention, the aforesaid objects and advantages are obtained by means of a method 40 unfolding wind blades for a wind turbine 100 having foldable blades 20, as described in the present description.

In accordance with an embodiment, the method 40 for unfolding wind blades includes a step of stopping 501 the rotor body 2 in the position of folded blades 20.

Such a stopping step 501 serves to prevent any rotation movement by the rotor body 2 so as to allow the unfolding of the blades 20 from such a position.

In accordance with an embodiment, the step of rotating the two blades 20 from the folded position to the unfolded position is preceded by a step of unfastening 502 said blade fastening devices 120, thus freeing the blades 20 from tower 50.

In accordance with an embodiment, the method for unfolding wind blades 40 comprises a rotation step 503 of the blades 20 from the folded position to the unfolded position, about the hinge axis P, by actuating said at least one actuator 5.

In accordance with an embodiment, at the end of blade unfolding, the blade longitudinal axis G and the rotor axis R lie on a same unfolded blade axial plane W-W.

In accordance with an embodiment, the unfolded blade axial plane W-W is substantially orthogonal to the tower axis T.

In accordance with an embodiment, the method for unfolding wind blades 40 further comprises the step of blocking 505 the blade folding structures 4 by the actuation of the blocking/unblocking devices 25.

The blade method for unfolding 40 according to the invention comprises a step of allowing the rotor body 2 to rotate 506, for example by opening the pincer bodies 91 of the brake disc 90.

The ì method 20 for unfolding the wind blades further comprises a step of orientating 504 the blades 20 so that the blades are arranged according to an angular position about the blade longitudinal axis G such as to allow the wind to bring the blades 20 into rotation about the rotor axis R, by actuating said blade orientation actuator 21.

In accordance with an embodiment, the step of rotating 503 the blades 20 from the folded position to the unfolded position is executed simultaneously with said step of orientating 504 the two blades 20.

The step of stopping 501 the rotation of the rotor body 2, the step of unfastening 502 the blade fastening devices 120 from tower 50, the step of rotating 503 the blades 20, the step of orientating the blades 20, the step of blocking 505 the blade folding structures 4 and the step of allowing the rotor body 2 to rotate 506 are preferably controlled by means of the blade unfolding/folding control unit 200.

In other words, the control unit carries out such steps by actuating the pincer bodies 91, the blade fastening devices 120, the at least one actuator 5, the blocking/unblocking devices 25 and the blade orientation actuators 21, in a synchronized manner.

A person skilled in the art may make several changes and adaptations to the above-described embodiments of the device, without thereby departing from the scope of the following claims. Each of the features described as belonging to a possible embodiment may be achieved irrespective of the other embodiments described. Various means and materials may be used to perform the different functions described without thereby departing from the scope of the invention. It should be understood that the expressions and terminology used serve a merely descriptive purpose and are therefore non-limiting. Furthermore, it is also worth noting that the term "comprising" does not exclude other elements or steps, the term "a/an" does not exclude a plurality. Furthermore, the drawings are not necessarily to scale.

## Claims

1. A method (30) for folding wind blades of a wind turbine (100) having folding blades (20), said wind turbine (100) comprising:
- a rotor unit (1) comprising a rotor body (2) arranged to rotate about a rotor axis (R);
- a tower (50) adapted to support said rotor unit (1), said tower defining an outer lateral surface (53) of tower;
- two blades (20) each defining a respective blade longitudinal axis (G) arranged along a main direction of blade extension, and an outer surface (80) of blade, said blades (20) being engaged to the rotor body (1) to rotate with respect to each other about a hinge axis (P) between an unfolded stopped angular position and a folded position, wherein, in said unfolded stopped angular position, both the blades (20) are arranged with the respective blade axis (G) along a same unfolded blade axial plane (W-W) comprising said rotor axis (R), in positions which are opposite to each other with respect to the rotor axis (R), in order to be able to be affected by the wind to bring said rotor body (2) into rotation about said rotor axis (R), and wherein, in said folded position, said at least two blades (20) are angularly close to each other and placed side-by-side with the tower (50);
- at least one actuator (5) arranged to rotate the two blades (20) with respect to each other between the unfolded stopped angular position and the folded position;
- for each of said two blades (20), a blade joint (15) interposed between the rotor body (2) and a blade fastening end (20'), comprising a blade orientation actuator (21) adapted to actuate the rotation of the blade (20) about the blade longitudinal axis (G);
- a blade unfolding/folding control unit (200) having an input for receiving an unfold/fold command signal, said control unit being operatively connected with said at least one actuator (5) and said blade orientation actuator (21);
said method (30) for folding wind blades being **characterized in that** it comprises the steps of:
- stopping (404) the rotation of the rotor body (2) in a preset stopped angular position, with blades (20) in the unfolded position;
- rotating (407) the two blades (20) with respect to each other from the stopped angular position to the folded position, about said hinge axis (P), wherein said two blades (20) are arranged substantially along said tower (50);
- orientating (409) said two blades (20) so that the outer surface (80) of blade is arranged at least partly tangent to said outer lateral surface (53) of tower, by actuating said blade orientation actuator (21);
- said step of stopping (404) the rotation of the rotor body, said step of rotating (407) the two blades (20), said step of orientating (409) the two blades (20) being controlled by means of said blade unfolding/folding control unit (200).

2. The method according to claim 1, wherein said step of rotating (407) the two blades (20) from the stopped angular position to the folded position is executed simultaneously with said step of orientating (409) the two blades (20).

3. The method according to at least one preceding claim, wherein the step of rotating (407) the two blades (20) from the stopped angular position to the folded position occurs due to the effect of the applied force of gravity of the blades (20), and/or wherein the step of rotating (407) the blades (20) from the stopped angular position to the folded position occurs in cooperation with a braking step (408) in opposition to the rotation of the blades (20) from the stopped angular position to the folded position,
said braking step (408) being executed by actuating said at least one actuator (5) as a brake, or
said braking step (408) being executed by actuating a folding brake (19), said folding brake (19) being comprised in said rotor unit (1).

4. The method according to at least one preceding claim, wherein the step of stopping (404) the rotation of the rotor body (2) in a preset stopped angular position is preceded by a step of reducing (403) the rotation speed of the rotor unit (1) up to zeroing the speed at the preset stopped angular position wherein the step of reducing (403) the rotation speed of the rotor unit (1) is executed by actuating each blade orientation actuator (21) so as to orientate the blades (20) about the respective blade longitudinal axis (G) according to an angle of incidence such to cause on the blades a high aerodynamic resistance (20) to the rotation thereof about the rotor axis (R) by means of an aerodynamic braking step (402).

5. The method according to at least one preceding claim, wherein the wind turbine (100) comprises blocking/unblocking devices (25) for blocking the blades (20) with respect to the rotor body (2) when they are in the unfolded position, and for releasing the blades (20) with respect to the rotor body (2) when the rotation of the blades (20) is required from the unfolded position to the folded position, wherein said step of rotating (407) the two blades (20) from the stopped angular position to the folded position is preceded by a step of unblocking (406) said blocking/unblocking devices (25).

6. The method according to at least one preceding claim, comprising a second step (411) of orientating said two blades (20) about the blade longitudinal axis (G) thereof to accurately adjust the position of the blades (20) when the blades (20) are in the folded position, said second step of orientating (411) being executed by actuating said blade orientation actuator (21) of each blade (20).

7. The method according to at least one preceding claim, comprising a second step of rotating (412) said two blades (20) about the hinge axis (P) to accurately adjust the position of the blades (20) when the blades (20) are in the folded position, said second step of rotating (412) being executed by actuating said actuator (5).

8. The method according to at least one preceding claim, wherein the second step of orientating (411) the blades (20) is executed in cooperation with the second step of rotating (412) the blades 20.

9. The method according to at least one preceding claim, wherein, when the two blades (20) are in the folded position, each blade (20) and the tower (50) form together a profile with a reduced aerodynamic resistance.

10. The method according to at least one preceding claim, wherein the wind turbine (100) comprises blade fastening devices (120) which can be actuated between an engaged position, in which the blades (20) are restrained to the tower (50) in the folded position, and a disengaged position, in which the blades (20) are free to move away from the tower (50), said method further comprising a step of fastening (413) the blades (20) to the tower (50), when said blades (20) are in the folded position, by actuating said blade fastening devices (120).

11. A method (40) for unfolding wind blades of a wind turbine (100) having foldable blades (20), said turbine (100) comprising:
- a rotor unit (1) comprising a rotor body (2) arranged to rotate about a rotor axis (R);
- a tower (50) adapted to support said rotor unit (1), said tower defining an outer lateral surface (53) of tower;
- two blades (20) each defining a respective blade longitudinal axis (G) arranged along a main direction of blade extension, and an outer surface (80) of blade, said blades (20) being connected to the rotor body (1) to rotate with respect to each other about a hinge axis (P) between an unfolded stopped angular position and a folded position, wherein, in said unfolded stopped angular position, both the blades (20) are arranged with the respective blade axis (G) along a same unfolded blade axial plane (W-W) comprising said rotor axis (R), in positions which are opposite to each other with respect to the rotor axis (R), in order to be able to be affected by the wind to bring said rotor body (2) into rotation about said rotor axis (R), and wherein, in said folded position, said at least two blades (20) are angularly close to each other and placed side-by-side with the tower (50);
- at least one actuator (5) arranged to rotate the two blades 20 with respect to each other between the unfolded stopped angular position and the folded position;
- for each of said two blades (20), a blade joint (15) interposed between the rotor body (2) and a blade fastening end (20'), comprising a blade orientation actuator (21) adapted to actuate the rotation of the blade (20) about the blade longitudinal axis (G);
- a blade unfolding/folding control unit (200) having an input for receiving an unfold/fold command signal, said control unit being operatively connected with said at least one actuator (5) and said blade orientation actuator (21);
said method for unfolding wind blades (40) being **characterized in that** it comprises the steps of:
- rotating (503) the two blades (20) with respect to each other from the folded position, in which said two blades (20) are arranged substantially along said tower (50) and are orientated so that the outer surface (80) of blade is at least partly tangent to the outer lateral surface (53) of tower, to the unfolded position, by actuating said at least one actuator (5);
- orientating (504) said two blades (20) so that the outer surface (81) of blade is arranged according to an angular position about the blade longitudinal axis (G) such as to allow the wind to bring the blades (20) into rotation about the rotor axis (R), by actuating said blade orientation actuator (21);
- allowing the rotor body (2) to rotate (506) about the rotor axis (R);
- said step of rotating (503) the blades (20), said step of orientating (504) and said step of allowing the rotor body (2) to rotate (506) being controlled by means of said blade controlling/folding unit (200).

12. The method according to claim 11, wherein said step of rotating (503) the two blades (20) from the folded position to the unfolded position is followed by a step of blocking (505) the blades (20) in the unfolded position with respect to the rotor body by means of blocking/unblocking devices (25) comprised in said wind turbine (100), which are adapted to block the blades (20) with respect to the rotor body (2) when they are in the unfolded position and which are adapted to release the blades (20) with respect to the rotor body (2) when the rotation of the blades (20) from the unfolded position to the folded position is required.

13. The method according to at least one of claims 11 to 12, wherein said step of rotating (503) the blades (20) from the folded positon to the unfolded position is preceded by a step of unfastening (502) the blades (20) from the tower (50) by actuating blade fastening devices (120), said blade fastening devices (120) being comprised in said wind turbine and being operable between an engaged position, in which the blades (20) are restrained to the tower (50) in the folded position, and a disengaged position, in which the blades (20) are free to move away from the tower (50).

14. The method according to at least one of claims 11 to 13, wherein said step of unfastening (502) the blades (20) from the tower (50) is preceded by a step of stopping (501) the rotor body (2).

15. A method for actuating blades (35) of a folding blade wind turbine (100), comprising:
- the method (30) for folding wind blades according to at least one of claims 1 to 10;
- the method (40) for unfolding wind blades according to at least one of claims 11 to 14.

## Patentansprüche

1. Verfahren (30) zum Klappen von Windflügeln einer Klappflügel (20) aufweisenden Windkraftanlage (100), wobei die Windkraftanlage (100) aufweist:
- eine Rotoreinheit (1), die einen Rotorkörper (2) aufweist, der zur Drehung um eine Rotorachse (R) angeordnet ist;
- eine Säule (50), die dazu ausgelegt ist, die Rotoreinheit (1) zu tragen, wobei die Säule eine seitliche Außenoberfläche (53) der Säule definiert;
- zwei Flügel (20), deren jeder eine jeweilige Flügellängsachse (G), die entlang einer Hauptrichtung der Flügelerstreckung angeordnet ist, sowie eine Außenoberfläche (80) des Flügels definiert, wobei die zwei Flügel (20) mit dem Rotorkörper (2) in Eingriff stehen, um sich relativ zueinander um eine Gelenkachse (P) zwischen einer entklappten gestoppten Winkelposition und einer geklappten Position zu drehen, wobei in der entklappten gestoppten Winkelposition beide Flügel (20), mit der jeweiligen Flügelachse (G) entlang einer gleichen entklappten Flügelaxialebene (W-W), welche die Rotorachse (R) aufweist, in Positionen angeordnet sind, die in Bezug auf die Rotorachse (R) einander entgegengesetzt sind, um durch Beeinflussung durch den Wind in der Lage zu sein, den Rotorkörper (2) um die Rotorachse (R) in Drehung zu versetzen, und wobei in der geklappten Position die zumindest zwei Flügel (20) eng aneinander gewinkelt sind und Seite an Seite mit der Säule (50) angeordnet sind;
- zumindest einen Aktuator (5), der angeordnet ist, um die zwei Flügel (20) relativ zueinander zwischen der entklappten gestoppten Winkelposition und der geklappten Position zu drehen;
- wobei für jeden der zwei Flügel (20) ein Flügelgelenk (15), das zwischen dem Rotorkörper (2) und einem Flügelbefestigungsende (20') eingefügt ist, einen Flügelorientierungsaktuator (21) aufweist, der dazu ausgelegt ist, die Drehung des Flügels (20) um die Flügellängsachse (G) herum zu bewirken;
- eine Flügel-Entklapp-Klappsteuereinheit (200) mit einem Eingang zur Aufnahme eines Entklapp-/Klappbefehlsignals, wobei die Steuereinheit mit dem zumindest einen Aktuator (5) und dem Flügelorientierungsaktuator (21) betriebsmäßig verbunden ist;
wobei das Verfahren (30) zum Klappen von Windflügeln **dadurch gekennzeichnet ist, dass** es die Schritte aufweist:
- Stoppen (404) der Drehung des Rotorkörpers (2) in einer voreingestellten gestoppten Winkelposition, mit den Flügeln (20) in der entklappten Position;
- Drehen (407) der zwei Flügel (20) relativ zueinander von der gestoppten Winkelposition zu der geklappten Position um die Gelenkachse (P) herum, wobei die zwei Flügel (20) im Wesentlichen entlang der Säule (50) angeordnet sind;
- Orientieren (409) der zwei Flügel (20), durch Aktivieren des Flügelorientierungsaktuators (21), derart, dass die Außenoberfläche (80) des Flügels zumindest teilweise tangential zu der äußeren Seitenoberfläche (53) der Säule angeordnet ist;
- wobei der Schritt des Stoppens (404) der Drehung des Rotorkörpers, der Schritt des Drehens (407) der zwei Flügel (20), der Schritt des Orientierens (409) der zwei Flügel (20) mittels der Flügel-Entklapp-/Klappsteuereinheit (200) gesteuert wird.

2. Das Verfahren nach Anspruch 1, wobei der Schritt des Drehens (407) der zwei Flügel (20) von der gestoppten Winkelposition zu der geklappten Position gleichzeitig mit dem Schritt des Orientierens (409) der zwei Flügel (20) ausgeführt wird.

3. Das Verfahren nach zumindest einem vorhergehenden Anspruch, wobei der Schritt des Drehens (407) der zwei Flügel (20) von der gestoppten Winkelposition zu der gefalteten Position aufgrund des Effekts der einwirkenden Schwerkraft der Flügel (20) erfolgt, und/oder wobei der Schritt des Drehens (407) der Flügel (20) von der gestoppten Winkelposition zu der geklappten Position im Zusammenwirken mit einem Bremsschritt (408) entgegen der Drehung der Flügel (20) von der gestoppten Winkelposition zur geklappten Position erfolgt,
wobei der Bremsschritt (408) durch Aktivieren des zumindest einen Aktuators (5) als Bremse ausgeführt wird, oder
der Bremsschritt (408) durch Aktivieren einer Klappbremse (19) ausgeführt wird, wobei die Klappbremse (19) in der Rotoreinheit (1) vorgesehen ist.

4. Das Verfahren nach zumindest einem vorhergehenden Anspruch, wobei dem Schritt des Stoppens (404) der Drehung des Rotorkörpers (2) in einer voreingestellten gestoppten Winkelposition ein Schritt des Reduzierens (403) der Drehzahl der Rotoreinheit (1) bis zu Null gehender Geschwindigkeit in der voreingestellten gestoppten Winkelposition vorausgeht, wobei der Schritt des Reduzierens (403) der Drehzahl der Rotoreinheit (1) durch Aktivierung jedes Flügelorientierungsaktuators (21) ausgeführt wird, um die Flügel (20) um die jeweilige Flügellängsachse (G) gemäß einem Einfallswinkel zu orientieren, um zu veranlassen, dass mittels eines aerodynamischen Bremsschritts (402) auf die Flügel ein hoher aerodynamischer Widerstand (20) auf deren Drehung um die Rotorachse (R) einwirkt.

5. Das Verfahren nach zumindest einem vorhergehenden Anspruch, wobei die Windkraftanlage (100) Blockier-/Entblockiervorrichtungen (25) aufweist, um die Flügel (20) in Bezug auf den Rotorkörper (2) zu blockieren, wenn sie in der entklappten Position sind, und die Flügel (20) in Bezug auf den Rotorkörper (2) zu lösen, wenn die Drehung der Flügel (20) von der entklappten Position zur geklappten Position erforderlich ist, wobei dem Schritt des Drehens (407) der zwei Flügel (20) von der gestoppten Winkelposition zu der geklappten Position ein Schritt des Entblockierens (406) der Blockier-/Entblockiervorrichtungen (25) vorausgeht.

6. Das Verfahren nach zumindest einem vorherhergehenden Anspruch, das einen zweiten Schritt (411) des Orientierens der zwei Flügel (20) um deren Flügellängsachse (G) aufweist, um die Position der Flügel (20) genau zu justieren, wenn die Flügel (20) in der geklappten Position sind, wobei der zweite Schritt des Orientierens (411) durch Aktivieren des Flügelorientierungsaktuators (21) jedes Flügels (20) ausgeführt wird.

7. Das Verfahren nach zumindest einem vorhergehenden Anspruch, das einen zweiten Schritt des Drehens der zwei Flügel (20) um die Gelenkachse (P) aufweist, um die Position der Flügel (20) genau zu justieren, wenn die Flügel (20) in der geklappten Position sind, wobei der zweite Schritt des Drehens (412) durch Aktivieren des Aktuators (5) ausgeführt wird.

8. Das Verfahren nach zumindest einem vorhergehenden Anspruch, wobei der zweite Schritt des Orientierens (411) der Flügel (20) gemeinsam mit dem zweiten Schritt des Drehens (412) der Flügel (20) ausgeführt wird.

9. Das Verfahren nach zumindest einem vorhergehenden Anspruch, wobei, wenn die zwei Flügel (20) in der geklappten Position sind, jeder Flügel (20) und die Säule (5) gemeinsam ein Profil mit reduziertem aerodynamischen Widerstand bilden.

10. Das Verfahren nach zumindest einem vorhergehenden Anspruch, wobei die Windkraftanlage (100) Flügelfesthaltevorrichtungen (120) aufweist, die zwischen einer eingerückten Position, in der die Flügel (20) in der geklappten Position an der Säule (50) gehalten werden, und einer ausgerückten Position, in der sich die Flügel von der Säule (50) frei wegbewegen, aktiviert werden können, wobei das Verfahren ferner einen Schritt (413) aufweist, um durch Aktivieren der Flügelfesthaltevorrichtungen (120) die Flügel an der Säule (50) festzuhalten, wenn die Flügel (20) in der geklappten Position sind.

11. Verfahren (40) zum Entklappen von Windflügeln einer klappbare Flügel (20) aufweisenden Windkraftanlage (100), wobei die Windkraftanlage (100) aufweist:
- eine Rotoreinheit (1), die einen Rotorkörper (2) aufweist, der zur Drehung um eine Rotorachse (R) angeordnet ist;
- eine Säule (50), die dazu ausgelegt ist, die Rotoreinheit (1) zu tragen, wobei die Säule eine seitliche Außenoberfläche (53) der Säule definiert;
- zwei Flügel (20), deren jeder eine jeweilige Flügellängsachse (G), die entlang einer Hauptrichtung der Flügelerstreckung angeordnet ist, sowie eine Außenoberfläche (80) des Flügels definiert, wobei die Flügel (20) mit dem Rotorkörper (1) verbunden sind, um sich relativ zueinander um eine Gelenkachse (P) zwischen einer entklappten gestoppten Winkelposition und einer geklappten Position zu drehen, wobei in der entklappten gestoppten Winkelposition beide Flügel (20), mit der jeweiligen Flügelachse (G) entlang einer gleichen entklappten Flügelaxialebene (W-W), welche die Rotorachse (R) aufweist, in Positionen angeordnet sind, die in Bezug auf die Rotorachse (R) einander entgegengesetzt sind, um durch Beeinflussung durch den Wind in der Lage zu sein, den Rotorkörper (2) um die Rotorachse (R) in Drehung zu versetzen, und wobei in der geklappten Position die zumindest zwei Flügel (20) eng aneinander gewinkelt sind und Seite an Seite mit der Säule (50) angeordnet sind;
- zumindest einen Aktuator (5), der angeordnet ist, um die zwei Flügel (20) relativ zueinander zwischen der entklappten gestoppten Winkelposition und der geklappten Position zu drehen;
- wobei für jeden der zwei Flügel (20) ein Flügelgelenk (15), das zwischen dem Rotorkörper (2) und einem Flügelbefestigungsende (20') eingefügt ist, einen Flügelorientierungsaktuator (21) aufweist, der dazu ausgelegt ist, die Drehung des Flügels (20) um die Flügellängsachse (G) herum zu bewirken;
- eine Flügel-Entklapp-/Klappsteuereinheit (200) mit einem Eingang zur Aufnahme eines Entklapp-/Klappbefehlsignals, wobei die Steuereinheit mit dem zumindest einen Aktuator (5) und dem Flügelorientierungsaktuator (21) betriebsmäßig verbunden ist;
wobei das Verfahren zum Entklappen der Windflügel (40) **dadurch gekennzeichnet ist, dass** es die Schritte aufweist:
- Drehen (503) der zwei Flügel (20) relativ zueinander, durch Aktivieren des zumindest einen Aktuators, von der geklappten Position, in der zwei Flügel (20) im Wesentlichen entlang der Säule (50) angeordnet und derart orientiert sind, dass die Außenoberfläche (80) des Flügels zumindest teilweise tangential zur äußeren Seitenoberfläche (53) der Säule ist, zu der entklappten Position;
- Orientieren (504) der zwei Flügel (20), durch Aktivierung des Flügelorientierungsaktuators (21), derart, dass die Außenoberfläche (81) des Flügels gemäß einer Winkelposition um die Flügellängsachse (G) angeordnet wird, um zu erlauben, dass der Wind die Flügel (20) um die Rotorachse (R) in Drehung versetzt,
- Erlauben, dass sich der Rotorkörper (2) um die Rotorachse (R) herum dreht (506);
wobei der Schritt des Drehens (503) der Flügel (20), der Schritt des Orientierens (504) und der Schritt des Erlaubens (506), dass sich der Rotorkörper (2) dreht, mittels der Flügel-Entklapp-/Klappsteuereinheit (200) gesteuert werden.

12. Das Verfahren nach Anspruch 11, wobei dem Schritt des Drehens (503) der zwei Flügel (20) von der geklappten Position zu der entklappten Position ein Schritt des Blockierens (505) der Flügel (20) in der entklappten Position in Bezug auf den Rotorkörper mittels in der Windkraftanlage (100) vorgesehenen Blockier-/Entblockiervorrichtungen (25) folgt, die dazu ausgelegt sind, die Flügel (20) in Bezug auf den Rotorkörper (2) zu blockieren, wenn sie in der entklappten Position sind, und die dazu ausgelegt sind, die Flügel (20) in Bezug auf den Rotorkörper (2) zu lösen, wenn die Drehung der Flügel (20) von der entklappten Position zu der geklappten Position erforderlich ist.

13. Das Verfahren nach zumindest einem der Ansprüche 11 bis 12, wobei dem Schritt des Drehens (503) der Flügel (20) von der geklappten Position zur entklappten Position ein Schritt des Lösens (502) der Flügel (20) von der Säule (50) durch Aktivieren der Flügelbefestigungsvorrichtung vorausgeht, wobei die Flügelfesthaltevorrichtungen (120) in der Windkraftanlage vorgesehen sind und zwischen einer eingerückten Position, in der die Flügel (20) in der geklappten Position an der Säule (50) gehalten werden, und einer ausgerückten Position, in der die Flügel (20) von der Säule (50) frei wegbeweglich sind, betreibbar sind.

14. Das Verfahren nach zumindest einem der Ansprüche 11 bis 13, wobei dem Schritt des Lösens (502) der Flügel (20) von der Säule (50) ein Schritt des Stoppens (501) des Rotorkörpers (2) vorausgeht.

15. Verfahren zum Aktivieren von Flügeln (35) einer Klappflügel-Windkraftanlage (100), welches aufweist:
- das Verfahren (30) zum Klappen von Windflügeln nach zumindest einem der Ansprüche 1 bis 10;
- das Verfahren (40) zum Entklappen von Windflügeln gemäß zumindest einem der Ansprüche 11 bis 14.

## Revendications

1. Procédé (30) pour replier des pales éoliennes d'une turbine éolienne (100) ayant des pales repliables (20), la turbine éolienne (100) comprenant :
- une unité de rotor (1) comprenant un corps de rotor (2) agencé pour tourner autour d'un axe de rotation (R),
- une tour (50) adaptée pour porter l'unité de rotor (1), la tour définissant une surface latérale extérieure (53) de la tour,
- deux pales (20), chacune définissant un axe longitudinal de pale (G) respectif agencé le long d'une direction principale de l'étendue de la pale et une surface extérieure de pale (80), les pales (20) étant attachées au corps de rotor (2) de façon à tourner l'une par rapport à l'autre autour d'un axe charnière (P) entre une position angulaire arrêtée ouverte et une position repliée, où, dans la position angulaire arrêtée ouverte, les deux pales (20) sont disposées, avec l'axe de pale (G) respectif le long d'un même plan axial de pale ouverte (W-W) comprenant l'axe de rotor (R), dans des positions qui sont opposées l'une à l'autre par rapport à l'axe de rotor (R), afin d'être en mesure d'être affectée par le vent pour mettre le corps de rotor (2) en rotation autour de l'axe de rotor (R), et où, dans la position repliée, lesdites au moins deux pales (20) sont angulairement proches l'une de l'autre et placées côte à côte avec la tour (50),
- au moins un actionneur (5) agencé pour faire tourner les deux pales (20) l'une par rapport à l'autre entre la position angulaire arrêtée ouverte et la position repliée,
- pour chacune des deux pales (20), une articulation de pale (15) interposée entre le corps de rotor (2) et une extrémité de fixation de pale (20'), comprenant un actionneur d'orientation de pale (21) adapté pour actionner la rotation de la pale (20) autour de l'axe longitudinal de pale (G),
- une unité de commande d'ouverture/repliage (200) ayant une entrée pour recevoir un signal de commande d'ouverture/repliage, l'unité de commande étant fonctionnellement connectée audit au moins un actionneur (5) et l'actionneur d'orientation de pale (21),
le procédé (30) pour replier des pales éoliennes étant **caractérisé en ce qu'**il comprend les étapes de :
- arrêter (404) la rotation du corps de rotor (2) dans une position angulaire arrêtée prédéterminée, les pales (20) étant dans la position ouverte,
- faire tourner (407) les deux pales (20) l'une par rapport à l'autre, autour de l'axe charnière (P), de la position angulaire arrêtée à la position repliée, où les deux pales (20) sont disposées sensiblement le long de la tour (50),
- orienter (409), en actionnant l'actionneur d'orientation de pale (21), les deux pales (20) de façon que la surface extérieure de pale (80) soit disposée au moins partiellement de manière tangentielle à la surface latérale extérieure (53) de la tour,
- l'étape d'arrêter (404) la rotation du corps de rotor, l'étape de faire tourner (407) les deux pales (20), l'étape de faire orienter (409) les deux pales (20) étant commandées à l'aide de l'unité de commande d'ouverture/repliage (200).

2. Procédé selon la revendication 1, **caractérisé en ce que** l'étape de faire tourner (407) les deux pales (20) de la position angulaire arrêtée à la position repliée est mise en œuvre en même temps que l'étape d'orientation (409) des deux pales (20).

3. Procédé selon au moins une revendication précédente, **caractérisé en ce que** l'étape de faire tourner (407) les deux pales (20) de la position angulaire arrêtée à la position repliée se produit dû au résultat de la force de gravité appliquée des deux pales (20), et/ou **en ce que** l'étape de faire tourner (407) les pales (20) de la position angulaire arrêtée à la position repliée se produit en coopération avec une étape de freinage (408) à l'encontre de la rotation des pales (20) de la position angulaire arrêtée à la position repliée,
l'étape de freinage (408) étant mise en œuvre en actionnant ledit au moins un actionneur (5) comme frein, ou
l'étape de freinage (408) étant mise en œuvre en actionnant un frein de repliage (19), le frein de repliage (19) étant inclus dans l'unité de rotor (1).

4. Procédé selon au moins une revendication précédente, **caractérisé en ce que** l'étape d'arrêter (404) la rotation du corps de rotor (2) dans une position angulaire arrêtée prédéterminée est précédée d'une étape pour faire réduire (403) la vitesse de rotation de l'unité de rotor (1) jusqu'à atteindre le niveau zéro à la position angulaire arrêtée prédéterminée, l'étape pour faire réduire (403) la vitesse de rotation de l'unité de rotor (1) étant mise en œuvre en actionnant chaque actionneur d'orientation de pale (21) pour orienter les pales (20) autour de l'axe longitudinal de pale (G) respectif selon un angle d'incidence afin de provoquer sur les pales, à l'aide d'une étape de freinage aérodynamique (402), une haute résistance (20) aérodynamique à la rotation de celles-ci autour de l'axe de rotor (R).

5. Procédé selon au moins une revendication précédente, **caractérisé en ce que** la turbine éolienne (100) comprend des dispositifs (25) de blocage/déblocage pour le blocage des pales (20) par rapport au corps de rotor (2) lorsqu'elles sont en position ouverte, et pour le relâchement des pales (20) par rapport au corps de rotor (2) lorsque la rotation des pales (20) de la position ouverte à la position repliée est requise, **caractérisé en ce que** l'étape de faire tourner (407) les deux pales (20) de la position angulaire arrêtée à la position repliée est précédée d'une étape de déblocage (406) desdits dispositifs de blocage/déblocage (25).

6. Procédé selon au moins une revendication précédente, comprenant une deuxième étape (411) d'orientation des deux pales (20) autour de l'axe longitudinal de pale (G) de celles-ci pour ajuster exactement la position des pales (20) lorsque les pales (20) sont en position repliée, la deuxième étape d'orientation (411) étant mise en œuvre en actionnant l'actionneur d'orientation de pale (21) de chaque pale (20).

7. Procédé selon au moins une revendication précédente, comprenant une deuxième étape (412) de faire tourner les deux pales (20) autour de l'axe charnière (P) pour ajuster exactement la position des pales (20) lorsque les pales (20) sont en position repliée, la deuxième étape de faire tourner (412) étant mise en œuvre en actionnant l'actionneur (5).

8. Procédé selon au moins une revendication précédente, **caractérisé en ce que** la deuxième étape de faire orienter (411) les pales (20) est mise en œuvre en coopération avec la deuxième étape de faire tourner (412) les pales (20).

9. Procédé selon au moins une revendication précédente, **caractérisé en ce que**, lorsque les deux pales (20) sont en position repliée, chaque pale (20) et la tour (50) forment ensemble une configuration avec une résistance aérodynamique réduite.

10. Procédé selon au moins une revendication précédente, **caractérisé en ce que** la turbine éolienne (100) comprend des moyens de fixation de pale (120) pouvant être actionnés entre une position fixée, dans laquelle les pales (20) sont restreints à la tour (50) dans la position repliée, et une position libre, dans laquelle les pales sont libres de s'écarter de la tour (50), le procédé comprenant en outre une étape de fixation (413) des pales (20) à la tour (50), lorsque les pales (20) sont en position repliée, par actionnement des moyens de fixation de pale (120).

11. Procédé (40) pour ouvrir des pales éoliennes d'une turbine éolienne (100) ayant des pales repliables (20), la turbine éolienne (100) comprenant :
- une unité de rotor (1) comprenant un corps de rotor (2) agencé pour tourner autour d'un axe de rotation (R),
- une tour (50) adaptée pour porter l'unité de rotor (1), la tour définissant une surface latérale extérieure (53) de la tour,
- deux pales (20), chacune définissant un axe longitudinal de pale (G) respectif agencé le long d'une direction principale de l'étendue de la pale et une surface extérieure de pale (80), les pales étant attachées au corps de rotor (2) de façon à tourner l'une par rapport à l'autre autour d'un axe charnière (P) entre une position angulaire arrêtée ouverte et une position repliée, où, dans la position angulaire arrêtée ouverte, les deux pales (20) sont disposées avec l'axe de pale (G) respectif le long d'un même plan axial de pale ouverte (W-W) comprenant l'axe de rotor (R) dans des positions qui sont opposées l'une à l'autre par rapport à l'axe de rotor (R), afin d'être en mesure d'être affectée par le vent pour mettre le corps de rotor (2) en rotation autour de l'axe de rotor (R), et où, dans la position repliée, lesdites au moins deux pales (20) sont angulairement proches l'une de l'autre et placées côte à côte avec la tour (50),
- au moins un actionneur (5) agencé pour faire tourner les deux pales (20) l'une par rapport à l'autre entre la position angulaire arrêtée ouverte et la position repliée,
- pour chacune des deux pales (20), une articulation de pale (15) interposée entre le corps de rotor (2) et une extrémité de fixation de pale (20'), comprenant un actionneur d'orientation de pale (21) adapté pour actionner la rotation de la pale (20) autour de l'axe longitudinal de pale (G),
- une unité de commande d'ouverture/repliage (200) ayant une entrée pour recevoir un signal de commande d'ouverture/repliage, l'unité de commande étant fonctionnellement connectée audit au moins un actionneur (5) et l'actionneur d'orientation de pale (21),
le procédé (40) pour ouvrir des pales éoliennes étant **caractérisé en ce qu'**il comprend les étapes de :
- faire tourner (503) les deux pales (20) l'une par rapport à l'autre, en actionnant ledit au moins un actionneur (5), de la position repliée, dans laquelle les deux pales (20) sont disposées sensiblement le long de la tour (50) et sont orientées de façon que la surface extérieure de pale (80) soit disposée au moins partiellement de manière tangentielle à la surface latérale extérieure (53) de la tour, à la position ouverte,
- orienter (504), en actionnant l'actionneur d'orientation de pale (21), les deux pales (20) de façon que la surface extérieure de pale (80) soit disposée dans une position angulaire autour de l'axe longitudinal de pale (G) telle que le vent puisse mettre les pales (20) en rotation autour de l'axe de rotor (R),
- rendre possible que le corps de rotor (2) puisse tourner (506) autour de l'axe de rotor (R),
- l'étape de faire tourner (503) les pales (20), l'étape d'orienter (504) et l'étape de rendre possible que le corps de rotor (2) puisse tourner (506) étant commandées à l'aide de l'unité de commande de ouverture/repliage (200).

12. Procédé selon la revendication 11, **caractérisé en ce que** l'étape pour faire tourner (503) les deux pales (20) de la position repliée à la position ouverte est suivie d'une étape de blocage (505) des pales (20) dans la position ouverte par rapport au corps de rotor à l'aide de dispositifs (25) de blocage/déblocage compris dans la turbine éolienne (100) qui sont adaptés pour bloquer les pales (20) par rapport au corps de rotor (2) lorsqu'ils sont en position ouverte et qui sont adaptés pour libérer les pales (20) par rapport au corps de rotor (2) lorsque la rotation des pales (20) de la position ouverte à la position repliée est requise.

13. Procédé selon au moins une des revendications 11 à 12, **caractérisé en ce que** la dite étape pour faire tourner (503) les pales (20) d'une position repliée à une position ouverte est précédée d'une étape de détachement (502) des pales (20) de la tour (50) par un actionnement des moyens de fixation de pale (120), les moyens de fixation de pale (120) étant compris dans la turbine éolienne et étant opérationnels entre une position fixée, dans laquelle les pales (20) sont restreints à la tour (50) dans la position repliée, et une position libre, dans laquelle les pales (20) sont libres de s'écarter de la tour (50).

14. Procédé selon au moins une des revendications 11 à 13, **caractérisé en ce que** l'étape de détachement (502) des pales (20) de la tour est précédé d'une étape d'arrêt (501) du corps de rotor (2).

15. Procédé (35) pour actionner des pales d'une turbine éolienne (100) ayant des pales repliables, comprenant :
- le procédé (30) pour replier des pales éoliennes selon au moins une des revendications 1 à 10,
- le procédé (40) pour ouvrir des pales éoliennes selon au moins une des revendications 11 à 14.
